# EUROPÄISCHE PATENTSCHRIFT

(11) **EP 3 651 126 B1**
(45) Veröffentlichungstag und Bekanntmachung des Hinweises auf die Patenterteilung: **10.01.2024**
(21) Anmeldenummer: 19207450.8
(22) Anmeldetag: 06.11.2019
(51) Int. Cl.: G07C 9/00

(54) **ZUGANGSKONTROLLSYSTEM, FAHRZEUG SOWIE VERFAHREN ZUM ERKENNEN EINES ZUGANGSWUNSCHES**
ACCESS CONTROL SYSTEM, VEHICLE AND METHOD FOR DETECTING AN ACCESS WISH
SYSTÈME DE CONTRÔLE D'ACCÈS, VÉHICULE ET PROCÉDÉ POUR DÉTECTER UN DÉSIR D'ACCÈS

(30) Priorität: 06.11.2018 DE 102018127687; 12.04.2019 DE 102019109761
(43) Veröffentlichungstag der Anmeldung: 13.05.2020
(73) Patentinhaber: Huf Hülsbeck & Fürst GmbH & Co. KG, 42551 Velbert (DE)
(72) Erfinder: Peschl, Andreas, 42555 Velbert (DE); Bextermöller, Hubert, 45468 Mülheim an der Ruhr (DE)
(74) Vertreter: Bals & Vogel Patentanwälte PartGmbB

(56) Entgegenhaltungen:
- EP-A1- 3 002 736
- DE-A1-102007 050 094
- DE-A1-102016 100 064
- US-A1- 2007 200 672
- US-A1- 2014 188 309
- US-A1- 2017 203 721
- US-A1- 2018 304 856

## Beschreibung

Die Erfindung betrifft ein Zugangskontrollsystem für ein Fahrzeug, ein Fahrzeug mit einem Zugangskontrollsystem sowie ein Verfahren zum Erkennen eines Zugangswunsches eines Benutzers zu einem Fahrzeug durch ein Zugangskontrollsystem.

Es sind Zugangskontrollsysteme für Fahrzeuge bekannt, bei denen sich ein Benutzer über einen ID-Geber am Fahrzeug authentifiziert, um Zugang zum Innenraum des Fahrzeugs zu erhalten. Nur bei erfolgreicher Authentifizierung erhält bspw. eine Schließvorrichtung ein Freigabesignal, sodass der Benutzer die Fahrzeugtür öffnen kann. Zur Kommunikation des Zugangskontrollsystems mit dem ID-Geber ist häufig eine elektronische Kommunikation, bspw. über Funk, vorgesehen. Um überhaupt festzustellen, dass sich der ID-Geber in der Nähe des Fahrzeugs befindet, sendet das Zugangskontrollsystem dazu regelmäßig in bestimmten Abständen Abfragesignale aus, welche vom ID-Geber, sofern sich dieser in einem bestimmten Radius zum Fahrzeug befindet, beantwortet werden. Dabei ist es jedoch von Nachteil, dass die regelmäßigen Abfragesignale meist einen hohen Energiebedarf aufweisen, welcher entsprechend zu Lasten eines Energievorrats vom Fahrzeug geht, wenn das Fahrzeug geparkt ist. Dadurch kann bei derartigen Systemen beim stehenden Fahrzeug eine Nutzungsdauer einer Fahrzeugbatterie reduziert werden. Dies kann insbesondere in Situationen problematisch sein, in denen das Fahrzeug für einen längeren Zeitraum, z.B. am Flughafen, abgestellt wurde. Die US 2007/200672 A1 offenbart eine gattungsgemäße Vorrichtung gemäß des Oberbegriffs von Patentanspruch 1.

Es ist eine Aufgabe der vorliegenden Erfindung, voranstehende aus dem Stand der Technik bekannte Nachteile zumindest teilweise zu beheben. Insbesondere ist es eine Aufgabe der vorliegenden Erfindung, einen Energiebedarf eines Zugangskontrollsystems eines Fahrzeugs, vorzugsweise bei langen Stillstandzeiten des Fahrzeugs, zu reduzieren.

Die voranstehende Aufgabe wird gelöst durch ein Zugangskontrollsystem mit den Merkmalen des unabhängigen Systemanspruchs, ein Fahrzeug mit den Merkmalen des unabhängigen Fahrzeuganspruchs sowie ein Verfahren zum Erkennen eines Zugangswunsches eines Benutzers mit den Merkmalen des unabhängigen Verfahrensanspruchs. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Zugangskontrollsystem beschrieben worden sind, selbstverständlich auch im Zusammenhang mit dem erfindungsgemäßen Fahrzeug und/oder dem erfindungsgemäßen Verfahren und jeweils umgekehrt, sodass bzgl. der Offenbarung zu den einzelnen Erfindungsaspekten stets wechselseitig Bezug genommen wird bzw. werden kann.

Erfindungsgemäß weist das Zugangskontrollsystem für ein Fahrzeug eine Sensorvorrichtung mit einem Erfassungsmittel zum Erfassen einer Annäherung (zumindest eines Benutzers oder einer ID-Gebereinheit) in einem Nahbereich des Fahrzeugs und einem Erkennungsmittel zum Erkennen der Annäherung in einem Detektionsbereich des Fahrzeugs auf. Dabei ist das Erkennungsmittel von einem Deaktivierungszustand bei Erfassen der Annäherung im Nahbereich in einen Aktivierungszustand bringbar, wobei im Deaktivierungszustand durch das Erkennungsmittel ein Generieren von Detektionssignalen zum Erkennen der Annäherung ausbleibt und im Aktivierungszustand Detektionssignale zum Erkennen der Annäherung durch das Erkennungsmittel generierbar sind.

Unter dem Erfassen der Annäherung durch das Erfassungsmittel kann verstanden werden, dass die Präsenz eines Benutzers und/oder eines ID-Gebers im Nahbereich des Fahrzeugs durch das Erfassungsmittel festgestellt werden kann. Vorzugsweise handelt es sich bei dem Nahbereich um einen Bereich des Fahrzeugs, welcher sich weiter vom Fahrzeug erstreckt, als der Detektionsbereich. Insbesondere kann unter dem Nahbereich ein Bereich verstanden werden, der durch das Erfassungsmittel messtechnisch abdeckbar ist, sodass der Nahbereich durch das Erfassungsmittel im Hinblick auf die Annäherung überwacht werden kann. Unter dem Detektionsbereich kann ein Bereich verstanden werden, der durch das Erkennungsmittel überwacht wird, insbesondere wenn sich das Erkennungsmittel im Aktivierungszustand befindet. Unter dem Erkennen der Annäherung durch das Erkennungsmittel kann verstanden werden, dass die Annäherung im Detektionsbereich durch das Erkennungsmittel erfasst wird, wobei insbesondere aus der Annäherung im Detektionsbereich weitere Informationen und/oder Schlussfolgerungen gezogen werden können. So ist es denkbar, dass das Erkennen eine Identifikation des Benutzers oder einer Handlungsintention der Annäherung umfasst. Wird bspw. der Benutzer und/oder ein ID-Geber des Benutzers im Detektionsbereich erfasst, kann daraus ein Öffnungswunsch des Benutzers erkannt werden, sodass bspw. eine Schließvorrichtung des Fahrzeugs öffnungsbereit geschaltet werden kann. Insbesondere kann ferner der Benutzer und/oder der ID-Geber selbst durch das Erkennungsmittel erkannt werden.

Vorzugsweise kann die Annäherung verschiedene Abschnitte aufweisen, wobei sich ein Benutzer in einem ersten Abschnitt bspw. dem Fahrzeug nähern kann und in einem zweiten Abschnitt eine ID-Gebereinheit in den Detektionsbereich bewegen kann. Zusätzlich oder alternativ kann die Annäherung einen Abschnitt aufweisen, bei welchem ein Benutzer seine Hand zu einem Türgriff bewegt, um diesen zu betätigen. Darin kann bspw. ein Öffnungswunsch erkannt werden. Im Detektionsbereich kann die Annäherung insbesondere durch die Detektionssignale erkannt werden. Unter dem Generieren der Detektionssignale kann vorzugsweise ein passives oder aktives Abfragen verstanden werden, ob eine Signalantwort vorliegt bzw. auf die Abfrage gegeben wird. Vorzugsweise kann das Generieren von Detektionssignalen ein Aussenden der Detektionssignale durch das Erkennungsmittel erfassen. Ferner ist es denkbar, dass das Generieren von Detektionssignalen ein Anlegen einer Messspannung am Erkennungsmittel umfasst, um die Signale zu generieren. Das Erfassungsmittel und das Erkennungsmittel können vorzugsweise eine bauliche Einheit bilden oder separat voneinander im Fahrzeug verbaubar sein und lediglich elektronisch bzw. steuerungstechnisch nach der Montage im Fahrzeug zusammenwirken.

Somit ist durch ein erfindungsgemäßes Zugangskontrollsystem insbesondere die Möglichkeit gegeben, die Annäherung zu erkennen bevor sich der Benutzer im Detektionsbereich befindet, wobei das Erkennungsmittel sich im Deaktivierungszustand befindet, solange der Benutzer nicht zumindest im Nahbereich des Fahrzeugs erfasst wurde. Dadurch kann dem Umstand Rechnung getragen werden, dass das Generieren von Detektionssignalen nicht notwendig ist, wenn sich der Benutzer bzw. die ID-Gebereinheit sich ohnehin nicht in der Nähe des Fahrzeugs befindet, bspw. weil das Fahrzeug in einem Parkhaus abgestellt wurde. Dementsprechend kann sich das Erkennungsmittel in dem Deaktivierungszustand in einem Standby-Zustand befinden oder vollständig ausgeschaltet sein, sodass ein Energiebedarf des Erkennungsmittels reduziert ist, wenn der Benutzer sich nicht zumindest im Nahbereich des Fahrzeugs befindet. Das Erfassungsmittel kann vorzugsweise einen Sensor umfassen, welcher einen im Vergleich zum Erkennungsmittel reduzierten Energiebedarf aufweist oder welcher zur Umfeldüberwachung des Fahrzeugs ohnehin in dem Parkzustand des Fahrzeugs aktiviert ist. Bei Erkennen der Annäherung durch das Erkennungsmittel kann bspw. eine Schließvorrichtung des Fahrzeugs, die Teil des Zugangskontrollsystems ist oder die mit dem Zugangskontrollsystem im Kommunikationsverbindung steht, betriebsbereit geschaltet werden oder betätigt werden, sodass der Benutzer eine Fahrzeugtür komfortabel öffnen kann.

Erfindungsgemäß ist das Erkennungsmittel zum Erkennen einer Authentifizierung eines Benutzers und/oder einer ID-Gebereinheit eines Benutzers ausgebildet.

Somit kann die Annäherung durch das Erkennungsmittel im Detektionsbereich durch die Authentifizierung erkannt werden und/oder die Authentifizierung nach einem Aussenden der Detektionssignale, insbesondere nach Erhalt einer Signalantwort der ID-Gebereinheit, durchführbar sein. Die Authentifizierung kann dabei vorzugsweise eine Identifizierung des Benutzers bzw. der ID-Gebereinheit umfassen. Insbesondere kann zur Authentifizierung eine Authentifizierungsinformation zwischen dem Erkennungsmittel und der ID-Gebereinheit des Benutzers ausgetauscht werden. Dazu können die Detektionssignale vorzugsweise Wecksignale für die ID-Gebereinheit umfassen, sodass die ID-Gebereinheit aktiv geschaltet wird oder durch die Detektionssignale mit Energie versorgt wird, um eine Authentifizierungsinformation an das Zugangskontrollsystem zu senden. Weiterhin ist es denkbar, dass die Authentifizierung des Benutzers bspw. durch einen Fingerabdruck oder eine andere biometrische Identifikation des Benutzers erfasst wird. Dazu kann das Erkennungsmittel bspw. einen Touchscreen, einen optischen Sensor oder dergleichen umfassen, um die Authentifizierung des Benutzers durchführen zu können. Durch korrekte Authentifizierung kann schließlich ein Zugangswunsch des Benutzers erkannt werden. Insbesondere wird die Authentifizierung somit lediglich im Aktivierungszustand des Erkennungsmittels durchgeführt, wodurch der Energiebedarf des Zugangskontrollsystems reduziert sein kann. Ferner kann die Sicherheit des Zugangskontrollsystems gesteigert sein, indem lediglich bei erfasster Annäherung auch tatsächlich eine Abfrage der Authentifizierung stattfindet und somit nicht permanent Signale ausgesendet werden, die ggf. abgefangen werden können. Die ID-Gebereinheit kann einen elektronischen Fahrzeugschlüssel, ein mobiles Endgerät, wie bspw. ein Smartphone oder Tablet, oder dergleichen umfassen. Vorzugsweise kann die ID-Gebereinheit einen Speicher aufweisen, in welchem eine Authentifizierungsinformation hinterlegt ist. Eine Kommunikation zwischen dem Erkennungsmerkmal und der ID-Gebereinheit kann vorzugsweise verschlüsselt durchführbar sein.

Weiterhin ist es bei einem erfindungsgemäßen Zugangskontrollsystem denkbar, dass die Sensorvorrichtung einen Näherungssensor zum Erkennen eines Öffnungswunsches einer Fahrzeugtür des Fahrzeugs umfasst. Somit kann bspw. zusätzlich zur Erfassung des Benutzers im Nahbereich und/oder der Authentifizierung des Benutzers im Detektionsbereich noch ein Erkennen des Öffnungswunsches am Näherungssensor vorgesehen sein, um einen Komfort des Benutzers beim Öffnen einer Fahrzeugtür zu erhöhen. Unter der Fahrzeugtür kann eine Fahrertür, Seitentür, Heckklappe oder dergleichen des Fahrzeugs verstanden werden. Der Näherungssensor kann vorzugsweise zum kapazitiven Erkennen des Öffnungswunsches ausgebildet sein und bspw. den Öffnungswunsch dann erkennen, wenn eine Hand des Benutzers am Türgriff der Fahrzeugtür erfasst wird. Zusätzlich oder alternativ kann das Erkennungsmittel einen Näherungssensor zum Erkennen des Öffnungswunsches aufweisen, insbesondere wobei das Erkennen der Annäherung im Detektionsbereich ein Erkennen des Öffnungswunsches der Fahrertür des Fahrzeugs umfasst.

Vorteilhafterweise kann bei einem erfindungsgemäßen Zugangskontrollsystem das Erfassungsmittel zum Erfassen der Annäherung in einem Fernbereich ausgebildet sein, insbesondere sodass ein Übergang der Annäherung vom Fernbereich in den Nahbereich erkennbar ist. Bspw. kann eine Überwachung des Fernbereichs den Nahbereich einschließen. Vorzugsweise kann der Nahbereich einen Bereich innerhalb eines Abstands von kleiner oder gleich 2m, bevorzugt von kleiner oder gleich 1m, von Fahrzeug und/oder vom Erfassungsmittel umfassen. Der Fernbereich kann vorteilhafterweise einen größeren Bereich um das Fahrzeug umfassen als der Nahbereich, wobei jedoch lediglich beim Erfassen der Annäherung im Nahbereich das Erkennungsmittel vom Deaktivierungszustand in den Aktivierungszustand gebracht wird. Dadurch kann durch das Zugangskontrollsystem mit einer höheren Wahrscheinlichkeit festgestellt werden, dass die Annäherung tatsächlich einem Zugangswunsch zum Fahrzeug zuzuordnen ist, wenn sich der Benutzer bzw. die ID-Gebereinheit direkt auf das Fahrzeug zubewegt. Streift ein Passant den Fernbereich, kann dieser zwar erfasst werden, jedoch führt dies nicht unmittelbar dazu, dass das Erkennungsmittel in den Aktivierungszustand überführt wird und somit Energie verbraucht.

Vorzugsweise kann das Erkennungsmittel bei einem erfindungsgemäßen Zugangskontrollsystem dazu ausgebildet sein, die Detektionssignale im Aktivierungszustand intervallweise und/oder kontinuierlich zu generieren. Durch eine kontinuierliche Generation der Detektionssignale kann die Reaktionszeit des Zugangskontrollsystems auf die Annäherung und folglich die Erkennung der Annäherung reduziert sein. Dadurch kann bspw. vorgesehen sein, dass die Detektionssignale energiearm ausgebildet sind und/oder der Detektionsbereich einen geringen Radius vom Fahrzeug aufweist. Durch eine intervallweise Aussendung der Generation der Detektionssignale können Zeiträume vorgesehen sein, bei denen die Detektionssignale nicht ausgesendet werden und in denen folglich weitere Energie eingespart werden kann. Die eingesparte Energie kann bspw. dazu genutzt werden, die Detektionssignale energiereicher zu generieren und somit den Detektionsbereich zu vergrößern, um eine frühere Erkennung der Annäherung durchführen zu können. Insbesondere kann das Erkennungsmittel dazu ausgebildet sein, die Detektionssignale in einem zeitlichen Abstand von kleiner oder gleich 250 Millisekunden, bevorzugt kleiner oder gleich 200 Millisekunden, besonders bevorzugt kleiner oder gleich 100 Millisekunden, zu generieren und/oder auszusenden.

Erfindungsgemäß ist vorgesehen, dass das Erkennungsmittel eine erste Kommunikationsschnittstelle für die Kommunikation mit einer ID-Gebereinheit eines Benutzers aufweist, wobei die erste Kommunikationsschnittstelle eine NFC-Schnittstelle umfasst. Zusätzlich kann die erste Kommunikationsschnittstelle eine kapazitive Schnittstelle umfassen. Dadurch ist ein Datenaustausch, insbesondere zur Authentifizierung mit der ID-Gebereinheit möglich. Durch eine NFC-Schnittstelle kann eine Schnittstelle geschaffen sein, die mit einer Karte oder einem mobilen Endgerät des Benutzers kommunizieren kann. Somit ist es für den Benutzer möglich, einen elektronischen Schlüssel in komfortabler Art und Weise mitzuführen, um zum Fahrzeug zu gelangen. Ferner ist es bspw. bei variablen Benutzern oder größeren Benutzergruppen vereinfacht, Authentifizierungsinformationen zu verwalten. Somit können Zugangsberechtigungen auf einfache Art und Weise verteilt und/oder entzogen werden. Dadurch kann das Zugangskontrollsystem besonders vorteilhaft für ein Car-Sharing, Fahrzeuge eines Firmenpools, Leihwagen oder auch innerhalb einer Familie verwendbar sein. Eine kapazitive Schnittstelle hat den Vorteil, dass ein elektronischer Schlüssel verwendbar ist und/oder die kapazitive Schnittstelle einen geringeren Energiebedarf aufweisen kann, sodass dieser insgesamt für das Zugangskontrollsystem noch weiter verringert sein kann.

Weiterhin ist es bei einem erfindungsgemäßen Zugangskontrollsystem denkbar, dass das Erfassungsmittel einen zweite Kommunikationsschnittstelle zur Kommunikation mit einer ID-Gebereinheit eines Benutzers aufweist, insbesondere wobei die zweite Kommunikationsschnittstelle eine Bluetooth-Schnittstelle, eine Bluetooth-Low-Energy-Schnittstelle, eine LF-Schnittstelle und/oder eine UWB-Schnittstelle umfasst.

Erfindungsgemäß weist das Erfassungsmittel einen Radar-Sensor, einen Lidar-Sensor, einen Ultraschallsensor, einen kapazitiven Sensor und/oder einen optischen Sensor zum Erfassen der Annäherung auf.

Weist das Erfassungsmittel die zweite Kommunikationsschnittstelle zur Kommunikation mit der ID-Gebereinheit auf, kann die Annäherung schon im Nahbereich auf die ID-Gebereinheit bezogen werden, sodass bspw. den Nahbereich streifende Passanten überhaupt nicht als Annäherung erkannt werden, wenn diese nicht die ID-Gebereinheit mit sich führen. Dadurch wird in diesen Fällen auch das Erkennungsmittel nicht vom Deaktivierungszustand in den Aktivierungszustand überführt. Damit kann weitere Energie des Zugangskontrollsystems eingespart werden. Weist das Erfassungsmittel ferner einen insbesondere kommunikationsunabhängigen Sensor auf, kann dadurch unabhängig von der ID-Gebereinheit eine Umfeldüberwachung des Fahrzeugs durchgeführt werden. Insbesondere ein optischer Sensor hat den Vorteil, dass es nicht notwendig ist Signale auszusenden, um die Erfassung der Annäherung durchzuführen. Stattdessen kann ein optischer Sensor zur passiven Überwachung des Fern- und/oder Nahbereichs ausgebildet sein und kann somit einen geringen Energieverbrach aufweisen. Darüber hinaus können durch das Erfassungsmittel weitere Informationen über das Umfeld des Fahrzeugs erfassbar und/oder auswertbar sein. Der optische Sensor kann vorzugsweise eine Kamera umfassen.

Im Rahmen der Erfindung kann ferner vorgesehen sein, dass das Erkennungsmittel zur Energieübertragung an eine ID-Gebereinheit ausgebildet ist, um eine Energieversorgung der ID-Gebereinheit zu ermöglichen. Somit kann das Erkennungsmittel zur Kommunikation mit passiven ID-Gebereinheiten ausgebildet sein. Dadurch benötigt die ID-Gebereinheit selbst keinen Energiespeicher, um mit dem Erkennungsmittel zu kommunizieren. Insbesondere kann die Energieübertragung durch die Detektionssignale durchführbar sein.

Erfindugsgemäß bildet der Detektionsbereich einen Teilbereich des Nahbereiches, insbesondere wobei der Detektionsbereich bis zu einem Abstand von kleiner oder gleich 50 cm, vorzugsweise kleiner oder gleich 10 cm, besonders bevorzugt kleiner oder gleich 3 cm zum Fahrzeug reicht. Entspricht der Nahbereich im Wesentlichen oder vollständig dem Detektionsbereich, hat dies den Vorteil, dass die Annäherung frühzeitig auch im Detektionsbereich erkennbar ist. Bildet der Detektionsbereich lediglich einen Teilbereich des Nahbereiches, kann für das Erkennungsmittel bspw. eine Technologie eingesetzt werden, welche lediglich eine geringe Reichweite aufweist. Weiterhin kann ein Komfort für den Benutzer erhöht sein, wenn bspw. die Detektionssignale prädiktiv ausgesendet werden noch bevor der Benutzer den Detektionsbereich erreicht hat, sodass unmittelbar bei Erreichen des Detektionsbereiches das Erkennen der Annäherung im Detektionsbereich durchführbar ist. Bei einem geringen Abstand des Detektionsbereiches zum Fahrzeug können zum einen leistungsfähigere Technologien eingesetzt werden, insbesondere bei moderatem Energieverbrauch. Ferner kann sichergestellt sein, dass die Annäherung tatsächlich die Intention eines Öffnungswunsches der Fahrzeugtür bzw. eines Zugangswunsches zum Fahrzeug entspricht, wenn der Benutzer bspw. eine ID-Gebereinheit aktiv in den Detektionsbereich hält.

Ferner kann bei einem erfindungsgemäßen Zugangskontrollsystems vorteilhafterweise die Sensorvorrichtung, insbesondere das Erkennungsmittel und/oder das Erfassungsmittel, mit einer Steuereinheit in Kommunikationsverbindung bringbar sein. Vorzugsweise kann dabei das Erkennungsmittel durch die Steuereinheit vom Deaktivierungszustand in den Aktivierungszustand und/oder umgekehrt bringbar sein. Bei der Steuereinheit kann es sich um eine dezentrale Steuereinheit handeln, die Teil der Sensorvorrichtung ist oder um ein zentrales Steuergerät des Fahrzeugs, welches mit der Sensorvorrichtung zur Datenkommunikation verbindbar ist. Die Kommunikationsverbindung zwischen der Steuereinheit und dem Erkennungsmittel und/oder dem Erfassungsmittel kann kabelgebunden und/oder drahtlos ausgebildet sein. Insbesondere kann die Steuereinheit mit der Sensorvorrichtung, insbesondere dem Erkennungsmittel und/oder dem Erfassungsmittel, permanent in Kommunikationsverbindung stehen. Durch die Steuereinheit kann eine umfassende Datenauswertung ermöglicht sein, um bspw. Authentifizierungsinformationen zu entschlüsseln und/oder zu verarbeiten.

Vorzugsweise kann bei einem erfindungsgemäßen Zugangskontrollsystem die Sensorvorrichtung eine Energiequelle aufweisen, durch welche das Erkennungsmittel und/oder das Erfassungsmittel unabhängig von einer Fahrzeugstromversorgung betreibbar ist. Die Energiequelle kann bspw. eine Solarzelle, einen Energiespeicher, wie eine Batterie, eine Induktionsschnittstelle und/oder einen Generator umfassen. Dadurch kann die Annäherung auch bei einem Ausfall der Fahrzeugstromversorgung erkannt und somit bspw. einem Benutzer ein Zugang zum Fahrzeug gewährt werden. Insbesondere kann dem Benutzer zumindest Zugang zum Innenraum und/oder zum Motorraum des Fahrzeugs gewährt werden. Weiterhin kann dadurch möglich sein, dass die Fahrzeugstromversorgung durch die Sensorvorrichtung nicht oder kaum belastet wird.

Im Rahmen der Erfindung kann ferner vorgesehen sein, dass eine Ortungsvorrichtung zum Lokalisieren einer ID-Gebereinheit und/oder eine Verifikationseinheit zum Identifizieren einer ID-Gebereinheit in einem Fahrzeuginnenraum des Fahrzeugs vorgesehen ist. Vorzugsweise kann dabei die Ortungsvorrichtung und/oder die Verifikationseinheit nach einer Authentifizierung im Detektionsbereich von einem Deaktivierungszustand in einen Aktivierungszustand bringbar sein. Somit kann das Zugangskontrollsystem verschiedene Sicherheitsstufen umfassen, um einem Benutzer über die Sensorvorrichtung zunächst einen Zugang zum Fahrzeug zu ermöglichen. Dadurch kann insbesondere erst, wenn die ID-Gebereinheit im Fahrzeug lokalisiert und/oder identifiziert wird, ein Zugang des Benutzers zu weiteren Fahrzeugfunktionen, insbesondere einem Motorstart, ermöglicht werden. Dies ist insbesondere bei Keyless-Go bzw. Passive-Entry Systemen von Vorteil. So kann vorgesehen sein, dass nicht schon die Authentifizierung zum Zugang zum Fahrzeug ausreicht, um das Fahrzeug auch zu starten. Vielmehr kann sichergestellt sein, dass sich die Person im Besitz des ID-Gebers im Fahrzeug befindet. Dadurch kann zum einen eine Diebstahlsicherung gegen Reichweitenverlängerung des ID-Gebersignals durch einen unbefugten Benutzer verbessert sein. Weiterhin können auch die Ortungsvorrichtung und/oder die Verifikationseinheit deaktiviert sein, solange eine Authentifizierung nicht vorliegt, sodass auch hier weiter an Energie eingespart werden kann.

Ferner kann bei einem erfindungsgemäßen Zugangskontrollsystem auch vorgesehen sein, dass das Erkennungsmittel und/oder das Erfassungsmittel an einer B-Säule und/oder einem Türgriff des Fahrzeugs anordbar ist. Vorzugsweise kann das Erfassungsmittel an einer B-Säule des Fahrzeugs anordbar sein und das Erkennungsmittel am Türgriff. Durch die Anordnung des Erfassungsmittels an der B-Säule des Fahrzeugs kann ein vorteilhafter Nahbereich am Fahrzeug ausgebildet sein, welcher durch das Erfassungsmittel überwachbar ist, sodass bspw. mehrere Türgriffe des Fahrzeugs gleichzeitig im Nahbereich, welcher durch das Erfassungsmittel überwachbar ist, liegen können. Ist das Erkennungsmittel am Türgriff angeordnet, befindet sich das Erkennungsmittel unmittelbar an dem Bauteil, welches auch den Zugang zum Fahrzeug und somit eine intuitive Bedienung des Zugangskontrollsystems durch den Benutzer ermöglicht. Handelt es sich bei dem Türgriff bspw. um den Türgriff einer Fahrertür, kann der Türgriff den zentralen Zugangspunkt für eine Zentralverriegelung des Fahrzeugs bilden, sodass bspw. mit einer Authentifizierung des Benutzers an der Fahrertür auch die Türen für einen Beifahrer und/oder weitere Passagiere entsperrt werden können.

Weiterhin kann bei einem erfindungsgemäßen Zugangskontrollsystems vorgesehen sein, dass mehrere Erkennungsmittel und/oder mehrere Erfassungsmittel vorgesehen sind, sodass mehrere, vorzugsweise sämtliche Türgriffe des Fahrzeugs mit jeweils einem Erkennungsmittel und/oder jeweils einem Erfassungsmittel im Hinblick auf die Annäherung überwachbar sind. Somit kann es bspw. nicht notwendig sein, eine Zentralverriegelung am Fahrzeug vorzusehen. Ferner kann eine Schließvorrichtung lediglich an einer Tür betätigbar sein, wenn der Benutzer bspw. an der Heckklappe etwas aus dem Kofferraum des Fahrzeugs holen möchte und somit eine Öffnung der weiteren Türen nicht benötigt. Eine Überwachung im Hinblick auf die Annäherung kann ein Erkennen und/oder ein Erfassen durch das Erkennungsmittel bzw. das Erfassungsmittel aufweisen.

Gemäß einem weiteren Aspekt der Erfindung ist ein Fahrzeug beansprucht, das ein erfindungsgemäßes Zugangskontrollsystem aufweist. Dazu kann das Fahrzeug ferner eine Schließvorrichtung aufweisen, die durch das Zugangskontrollsystem betätigbar bzw. betriebsbereit schaltbar ist. Somit bringt ein erfindungsgemäßes Fahrzeug die gleichen Vorteile mit sich, wie sie bereits ausführlich mit Bezug auf ein erfindungsgemäßes Zugangskontrollsystem beschrieben worden sind. Vorzugsweise kann das Fahrzeug eine B-Säule und/oder einen Türgriff aufweisen, an der bzw. an dem das Erkennungsmittel und/oder das Erfassungsmittel des Zugangskontrollsystems angeordnet ist.

Gemäß einem weiteren Aspekt der Erfindung ist ein Verfahren zum Erkennen eines Zugangswunsches eines Benutzers zu einem Fahrzeug, insbesondere einem erfindungsgemäßen Fahrzeug, durch ein erfindungsgemäßes Zugangskontrollsystem beansprucht. Das Verfahren umfasst die folgenden Schritte:
- Erfassen einer Annäherung in einem Nahbereich des Fahrzeugs,
- Überführen eines Erkennungsmittels zum Erkennen der Annäherung in einem Detektionsbereich des Fahrzeugs von einem Deaktivierungszustand, in welchem durch das Erkennungsmittel ein Generieren von Detektionssignalen zum Erkennen der Annäherung ausbleibt, in einen Aktivierungszustand,
- Generieren von Detektionssignalen zum Erkennen der Annäherung durch das Erkennungsmittel im Aktivierungszustand,
- Erkennen der Annäherung im Detektionsbereich.

Vorzugsweise werden die zuvor genannten Schritte des Verfahrens zumindest in der wiedergegebenen Reihenfolge durchgeführt. Auch kann die Reihenfolge der Schritte abgebrochen werden und dann von vorne z. B. mit dem ersten Schritt (Erfassen einer Annäherung in einem Nahbereich des Fahrzeugs) wieder beginnen. Somit bringt ein erfindungsgemäßes Verfahren die gleichen Vorteile mit sich, wie sie bereits ausführlich mit Bezug auf ein erfindungsgemäßes Zugangskontrollsystem und/oder ein erfindungsgemäßes Fahrzeug beschrieben worden sind. Insbesondere kann das Erkennen der Annäherung im Detektionsbereich in Abhängigkeit von einer Signalantwort auf die Detektionssignale erfolgen. Somit kann das Verfahren ferner folgenden Schritt umfassen:
- Empfangen einer Signalantwort in Abhängigkeit von zumindest einem Detektionssignal.

Im Rahmen der Erfindung kann ferner vorgesehen sein, dass das Erfassen der Annäherung kapazitiv, optisch, durch Radar, Lidar, Ultraschall und/oder eine Kommunikation mit einer ID-Gebereinheit, insbesondere durch eine Bluetooth-Kommunikation, eine Bluetooth-Low-Energy-Kommunikation, eine LF-Kommunikation und/oder eine UWB-Kommunikation, erfolgt. Somit kann die Annäherung passiv und/oder aktiv erkannt werden, wobei bei einer Kommunikation mit der ID-Gebereinheit bspw. Daten zur Authentifizierung und/oder dergleichen ausgetauscht werden können.

Weiterhin kann bei einem erfindungsgemäßen Verfahren vorgesehen sein, dass das Generieren der Detektionssignale intervallweise oder kontinuierlich durchgeführt wird. Dadurch kann jeweils ein bestimmter Energiebedarf der Detektionssignale verwendet werden, um den Energieverbrauch zu senken oder um den Detektionsbereich in unterschiedlicher Reichweite auszubilden. Somit kann der Energiebedarf beim Durchführen des Verfahrens verbessert sein. Insbesondere können die Detektionssignale in einem zeitlichen Abstand von kleiner oder gleich 250 Millisekunden, bevorzugt kleiner oder gleich 200 Millisekunden, besonders bevorzugt kleiner oder gleich 100 Millisekunden, generiert und/oder ausgesendet werden.

Weiterhin kann bei einem erfindungsgemäßen Verfahren vorgesehen sein, dass das Generieren der Detektionssignale kapazitiv und/oder durch eine NFC-Übertragung erfolgt. Durch eine NFC-Übertragung können auch größere Datenmengen, bspw. zur Authentifizierung, ausgetauscht werden. Ferner kann durch eine kapazitive und/oder NFCbasierte Generierung der Detektionssignale ein elektronischer Schlüssel zur Authentifizierung am Zugangskontrollsystem durch den Benutzer verwendbar sein, welcher komfortabel verwaltbar und/oder mitführbar ist.

Weiterhin kann im Rahmen der Erfindung vorgesehen sein, dass das Erkennen der Annäherung folgenden Schritt umfasst:
- Authentifizieren eines Benutzers und/oder einer ID-Gebereinheit eines Benutzers.

Insbesondere kann somit das Erkennen der Annäherung durch das Authentifizieren des Benutzers und/oder der ID-Gebereinheit im Detektionsbereich erfolgen. Dadurch kann nicht nur erkannt werden, dass der Benutzer bspw. die Öffnung einer Fahrzeugtür wünscht, sondern auch, dass es sich tatsächlich um einen berechtigten Benutzer handelt. Dadurch kann die Sicherheit des Fahrzeugs bzw. des Zugangskontrollsystems gesteigert sein.

Weiterhin kann ein erfindungsgemäßes Verfahren folgenden Schritt umfassen:
- Entriegelung einer Schließvorrichtung des Fahrzeugs.

Ist die Annäherung bspw. durch korrekte Authentifizierung erkannt, kann die Schließvorrichtung des Fahrzeugs entriegelt werden, sodass dem Benutzer ein Zugang zum Fahrzeug in einfacher Art und Weise ermöglicht ist. So kann vorgesehen sein, dass der Benutzer lediglich einen Türgriff betätigen und/oder ziehen muss, um ins Innere des Fahrzeugs zu gelangen.

Weiterhin kann bei einem erfindungsgemäßen Verfahren vorgesehen sein, dass das Verfahren folgenden Schritt umfasst:
- Aktivieren einer Innenauthentifikation des Fahrzeugs, insbesondere wobei das Aktivieren der Innenauthentifikation nach dem Entriegeln der Schließvorrichtung des Fahrzeugs durchgeführt wird.

Somit kann das Zugangskontrollsystem eine weitere Sicherheitsebene umfassen, wobei zunächst der Zugang zum Innenraum des Fahrzeugs ermöglicht wird und schließlich nach erfolgreicher Innenauthentifikation, d.h. insbesondere nach einer Bestätigung, dass sich ein berechtigter Benutzer innerhalb des Fahrzeugs befindet, ein Zugang zu weiteren Funktionen des Fahrzeugs, wie dem Motorstart, möglich ist.

Vorzugsweise kann die Innenauthentifikation ferner zumindest einen der folgenden Schritte umfassen:
- Orten einer ID-Gebereinheit, insbesondere im Fahrzeug,
- Identifizieren der georteten ID-Gebereinheit,
- Freigeben eines Motorstarts des Fahrzeugs.

Vorzugsweise können das Orten der ID-Gebereinheit, das Identifizieren der ID-Gebereinheit und das Freigeben des Motorstarts in Abhängigkeit voneinander und/oder nacheinander durchgeführt werden. Somit kann sichergestellt sein, dass sich der Benutzer im Fahrzeuginnenraum befindet und auch im Besitz der ID-Gebereinheit ist. Insbesondere kann lediglich bei korrekter Identifikation der georteten ID-Gebereinheit der Motorstart freigegeben werden.

Weitere, die Erfindung verbessernde Maßnahmen, ergeben sich aus der nachfolgenden Beschreibung zu einigen Ausführungsbeispielen der Erfindung, welche in den Figuren schematisch dargestellt sind. Sämtliche aus den Ansprüchen, der Beschreibung oder den Zeichnungen hervorgehende Merkmale und/oder Vorteile, einschließlich konstruktiver Einzelheiten, räumliche Anordnungen und Verfahrensschritte, können sowohl für sich als auch in den verschiedensten Kombinationen erfindungswesentlich sein. Dabei ist zu beachten, dass die Figuren nur beschreibenden Charakter haben und nicht dazu gedacht sind, die Erfindung in irgendeiner Form einzuschränken. Es zeigen:
- Figur 1: ein erfindungsgemäßes Fahrzeug mit einem erfindungsgemäßen Zugangskontrollsystem in einem ersten Ausführungsbeispiel,
- Figur 2: eine Detailansicht des erfindungsgemäßen Fahrzeugs mit dem erfindungsgemäßen Zugangskontrollsystem gemäß dem ersten Ausführungsbeispiel,
- Figuren 3a +3b: eine weitere schematische Darstellung des erfindungsgemäßen Zugangskontrollsystems des ersten Ausführungsbeispiels in einem Aktivierungs- und einem Deaktivierungszustand,
- Figur 4: ein erfindungsgemäßes Verfahren zum Betreiben des erfindungsgemäßen Zugangskontrollsystems des ersten Ausführungsbeispiel in schematischer Darstellung von Verfahrensschritten,
- Figuren 5a + b: ein erfindungsgemäßes Zugangskontrollsystem in einem weiteren Ausführungsbeispiel in einem Aktivierungs- und einem Deaktivierungszustand, und
- Figuren 6a + b: erfindungsgemäße Fahrzeuge mit erfindungsgemäßen Zugangskontrollsystemen in weiteren Ausführungsbeispielen.

In den nachfolgenden Figuren werden für die gleichen technischen Merkmale auch von unterschiedlichen Ausführungsbeispielen die identischen Bezugszeichen verwendet.

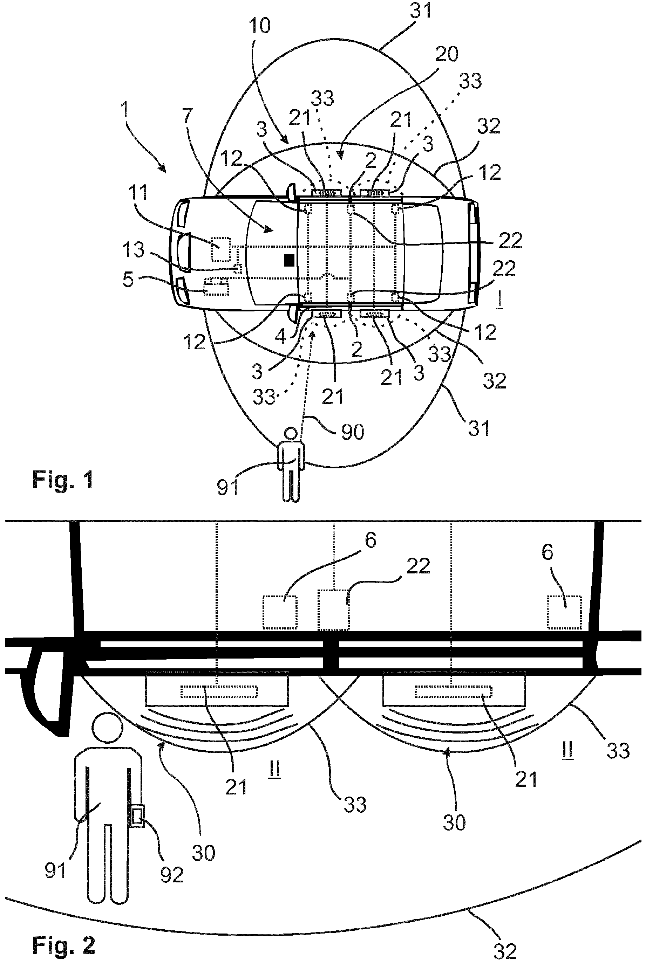

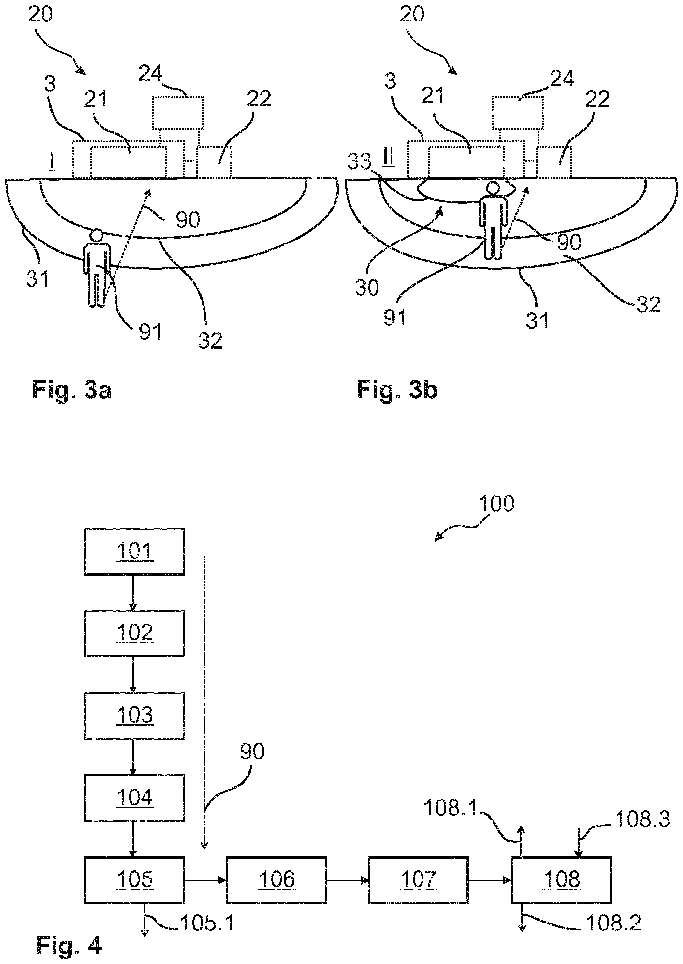

Figur 1 zeigt ein erfindungsgemäßes Fahrzeug 1 mit einem erfindungsgemäßen Zugangskontrollsystems 10 in einer schematischen Draufsicht in einem ersten Ausführungsbeispiel. Figur 4 zeigt dazu ein Verfahren 100 zum Erkennen eines Zugangswunsches eines Benutzers 91 zu dem Fahrzeug 1 durch das Zugangskontrollsystem 10 in schematischer Darstellung der Verfahrensschritte. Das Zugangskontrollsystem 10 weist eine Sensorvorrichtung 20 mit einem Erfassungsmittel 22 zum Erfassen 101 einer Annäherung 90 in einem Nahbereich 32 des Fahrzeugs 1 auf. Vorzugsweise ist das Erfassungsmittel 22 auch zum Erfassen der Annäherung 90 in einem Fernbereich 31 ausgebildet. das Erfassungsmittel 22 ist dabei in einer B-Säule 2 des Fahrzeugs 1 angeordnet, um einen möglichst umfassenden Überblick über zumindest eine Seite des Fahrzeugs 1 zu erreichen. Somit erstreckt sich der Nahbereich 32 über zwei Türgriffe 3 des Fahrzeugs 1. Möchte nun ein Benutzer 91 Zugang zum Fahrzeug 1 erhalten, bewegt sich der Benutzer 91 auf das Fahrzeug 1 zu, wobei er zunächst den Fernbereich 31 durchquert und in den Nahbereich 32 eintritt. Zumindest im Nahbereich 32, vorzugsweise beim Übergang vom Fernbereich 31 in den Nahbereich 32, wird der Benutzer 91 dabei durch das Erfassungsmittel 22 erfasst und somit dessen Annäherung 90 an das Fahrzeug 1 erkannt. Vorzugsweise kann das Erfassungsmittel 22 einen optischen Sensor, z.B. eine Kamera, zur Überwachung des Nahbereichs 32 und/oder des Fernbereichs 31 aufweisen. Die Sensorvorrichtung 20 weist ferner ein Erkennungsmittel 21 zum Erkennen 105 der Annäherung 90 in einem Detektionsbereich 33 des Fahrzeugs 1 auf. Solange sich der Benutzer 91 außerhalb des Nahbereichs 32 befindet, wie in den Figuren 1 und 3a dargestellt, befindet sich das Erkennungsmittel 21 in einem Deaktivierungszustand I. Dabei bleibt das Erkennen 105 der Annäherung 90 durch das Erkennungsmittel 21 insbesondere durch Generieren 103 von Detektionssignalen 30 aus, solange sich das Erkennungsmittel 21 im Deaktivierungszustand I befindet. Wird die Annäherung 90 durch den Benutzer 91 im Nahbereich 32 durch das Erfassungsmittel 22 erfasst, findet ein Überführen 102 des Erkennungsmittels 21 vom Deaktivierungszustand I in einen Aktivierungszustand II statt, wobei das Erfassen 101 der Annäherung 90 im Aktivierungszustand II insbesondere durch ein Generieren 103 vom Detektionssignal 30 zum Erkennen 105 der Annäherung 90 möglich ist. Möchte der Benutzer 91 nun eine Schließvorrichtung 6 einer Fahrzeugtür 4 des Fahrzeugs 1 betätigen, kann vorgesehen sein, dass sich der Benutzer 91 am Fahrzeug 1 authentifiziert. Dazu kann der Benutzer 91 bspw. in einem zweiten Abschnitt der Annäherung 90 eine ID-Gebereinheit 92 in den Detektionsbereich 33 bewegen, während er sich im Nahbereich 32 befindet, wie in den Figuren 2 und 3b dargestellt. Zum Generieren der Detektionssignale 30 kann die Sensorvorrichtung 20 eine separate Energiequelle 24 aufweisen, durch welche das Erkennungsmittel 21 und/oder das Erfassungsmittel 22 unabhängig von einer Fahrzeugstromversorgung 5 sein kann. Zusätzlich oder alternativ kann die Sensorvorrichtung 20 mit der Fahrzeugstromversorgung 5, d.h. z.B. mit einer Fahrzeugbatterie, des Fahrzeugs 1 zur Energieversorgung verbunden sein. Durch die Detektionssignale 30, welche im Aktivierungszustand II vom Erkennungsmittel 21 generiert werden, kann vorzugsweise ein Aufwecken der ID-Gebereinheit 92 durchgeführt werden. Bei der ID-Gebereinheit 92 kann es sich bspw. um eine Zugangskarte oder ein mobiles Endgerät, wie ein Smartphone oder ein Tablet des Benutzers 91 handeln. Vorzugsweise ist eine Authentifizierung 93 der ID-Gebereinheit 92 durch Erhalt von Authentifizierungsinformationen möglich, welche durch die Detektionssignale 30 abgerufen werden können. Dazu kann das Erkennungsmittel 21 vorzugsweise eine erste Kommunikationsschnittstelle aufweisen, die zur Kommunikation mit der ID-Gebereinheit 92 ausgebildet ist und vorzugsweise eine NFC-Schnittstelle umfassen kann. Vorzugsweise werden zumindest bis zum Empfangen 104 einer Signalantwort 30.1 in Abhängigkeit von dem Detektionssignalen 30 die Detektionssignale 30 intervallweise oder kontinuierlich generiert. Nach einem erfolgreichen Authentifizieren 105.1 kann schließlich ein Entriegeln 106 der Schließvorrichtung 6 des Fahrzeugs 1 erfolgen, sodass der Benutzer 91 die Fahrzeugtür 4 öffnen und einen Fahrzeuginnenraum 7 betreten kann. Vom auch im Fahrzeuginnenraum 7 eine weitere Sicherheitsstufe vorzusehen, kann nach dem Entriegeln 106 der Schließvorrichtung 6 ein Aktivieren 107 einer Innenauthentifikation 108 des Fahrzeugs 1 durchgeführt werden, wobei insbesondere eine Ortungsvorrichtung 12 und/oder eine Verifikationseinheit 13 aktiviert werden können. Dabei kann vorgesehen sein, dass die Ortungsvorrichtung 12 und/oder die Verifikationseinheit 13 betriebsbereit geschaltet werden. Nach Aktivierung 107 kann ein Orten 108.1 der ID-Gebereinheit 92 durch die Ortungsvorrichtung 12 durchgeführt wird, wobei ein Identifizieren 108.2 der georteten ID-Gebereinheit 92 im Fahrzeug 1 folgen kann, um die Identität der ID-Gebereinheit 92 zu bestätigen. Bei korrekter Identifikation kann durch Verifikationseinheit 13 ein Freigeben 108.3 eines Motorstarts des Fahrzeugs 1 erfolgen. Dazu kann ein Antrieb des Fahrzeugs 1 betriebsbereit geschaltet werden.

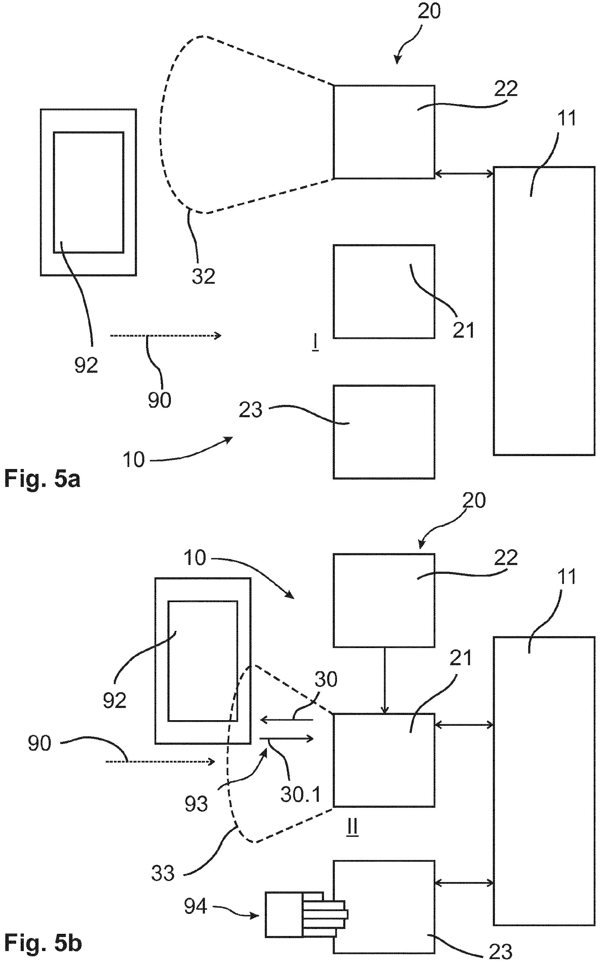

Die Figuren 5a und 5b zeigen ein erfindungsgemäßes Zugangskontrollsystem 10 gemäß eines weiteren Ausführungsbeispiels in schematischer Darstellung. Dabei weist das Zugangskontrollsystem 10 eine Sensorvorrichtung 20 mit einem Erfassungsmittel 22 zum Erfassen 101 einer Annäherung 90 in einem Nahbereich 32 eines Fahrzeugs 1 auf und ein Erkennungsmittel 21 zum Erkennen 105 der Annäherung 90 in einem Detektionsbereich 33. Weiterhin ist ein Näherungssensor 23 zum Erkennen eines Öffnungswunsches 94 für eine Fahrzeugtür 4 des Fahrzeugs 1 vorgesehen. Die Sensoreinheit 20 steht ferner mit einer Steuereinheit 11 in Kommunikationsverbindung, wobei die Steuereinheit 11 eine dezentrale Steuereinheit für die Sensorvorrichtung 20 sein kann oder ein zentrales Steuergerät des Fahrzeugs 1. In Figur 5a ist ferner eine ID-Gebereinheit 92 dargestellt, welche sich noch außerhalb des Nahbereichs 32 befindet. Dabei befindet sich das Erkennungsmittel 21 in einem Deaktivierungszustand I, in welchem ein Energieverbrauch des Erkennungsmittels 21 reduziert ist und ein Generieren 103 von Detektionssignalen 30 zum Erkennen 105 einer Annäherung 90 der ID-Gebereinheit 92 zum Fahrzeug 1 ausbleibt. Das Erfassungsmittel 22 steht dabei mit der Steuereinheit 11 in Kommunikationsverbindung, sodass die Signale aus dem Nahbereich 32 durch die Steuereinheit 11 ausgewertet werden können. Wird die ID-Gebereinheit 92 im Nahbereich 32 erkannt, wird ferner das Erkennungsmittel 21 vom Deaktivierungszustand I in einen Aktivierungszustand II gebracht. Figur 5b zeigt das Erkennungsmittel 21 im Aktivierungszustand II. Im Aktivierungszustand II werden durch das Erkennungsmittel 21 Detektionssignale 30 intervallweise oder kontinuierlich generiert, sodass eine Authentifizierung 93 der ID-Gebereinheit 92 möglich ist, sobald sich die ID-Gebereinheit 92 in den Detektionsbereich 33 des Fahrzeugs 1 begibt. Als Antwort auf die Detektionssignale 30 kann somit eine Signalantwort 30.1 von der ID-Gebereinheit 92 generiert werden, welche vom Erkennungsmittel 21 empfangen wird, um die ID-Gebereinheit 92 zu authentifizieren. Diese Authentifikationsinformationen können mit der Steuereinheit 11 ausgetauscht werden, um eine Schließvorrichtung 6 des Fahrzeugs 1 zu entriegeln. Durch den Näherungssensor 23 zum Erkennen eines Öffnungswunsches 94 der Fahrzeugtür 4 kann vorgesehen sein, dass die Schließvorrichtung 6 bspw. erst dann vollständig entriegelt, wenn eine Hand eines Benutzers 91 sich einem Türgriff 3, in welchem vorzugsweise das Erkennungsmittel 21 und der Näherungssensor 23 verbaut sein können, nähert. Auch dies kann durch die Steuereinheit 11 verarbeitet werden. Vorzugsweise kann das das Erkennungsmittel 21 eine erste Kommunikationsschnittstelle zur Kommunikation mit der ID-Gebereinheit 92 aufweisen. Die erste Kommunikationsschnittstelle kann beispielsweise eine NFC-Schnittstelle und/oder eine kapazitive Schnittstelle umfassen. Ferner kann das Erfassungsmittel 22 vorzugsweise eine zweite Kommunikationsschnittstelle zur Kommunikation mit der ID-Gebereinheit 92 aufweisen. Die zweite Kommunikationsschnittstelle kann beispielsweise eine Bluetooth-Schnittstelle, eine Bluetooth-Low-Energy-Schnittstelle, eine LF-Schnittstelle und/oder eine UWB-Schnittstelle umfasst. Zusätzlich oder alternativ ist es denkbar, dass das Erfassungsmittel 22 einen Radar-Sensor, einen Lidar-Sensor, einen Ultraschall-Sensor, einen kapazitiven Sensor und/oder einen optischen Sensor zum Erfassen 101 der Annäherung 90 aufweist

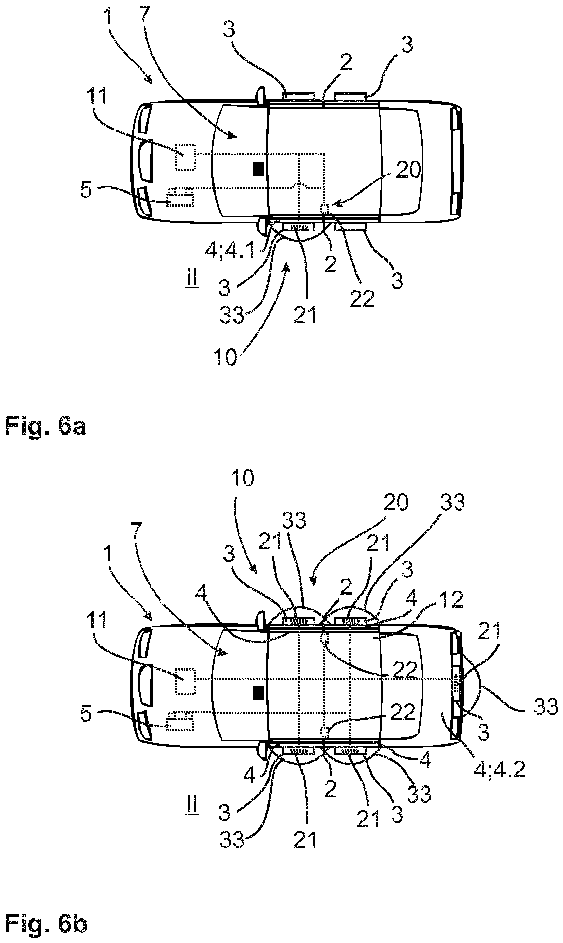

Figur 6a zeigt ein erfindungsgemäßes Fahrzeug 1 mit einem erfindungsgemäßen Zugangskontrollsystem 10, wobei ein Erkennungsmittel 21 in einem Türgriff 3 einer Fahrertür 4.1. des Fahrzeugs 1 verbaut ist. Somit kann ein Detektionsbereich 33 in einem Aktivierungszustand II des Erkennungsmittels 21 ebenfalls an der Fahrertür 4.1. ausgebildet sein, sodass eine Authentifizierung 93 durch einen Fahrer an der Fahrertür 4.1 durchgeführt werden kann. Da im Normalfall den Fahrer des Fahrzeugs 1 auch im Besitz der ID-Gebereinheit 92 ist, stellt dies eine kostengünstige Variante dar, die erfindungsgemäßen Vorteile für ein Fahrzeug 1 zu erreichen. Insbesondere kann dabei vorgesehen sein, dass lediglich ein einzelnes Erfassungsmittel 22, vorzugsweise an einer B-Säule 2 des Fahrzeugs 1, angeordnet ist, so dass ein Nahbereich 32 um den Türgriff 3 durch das Erfassungsmittel 22 überwachbar ist.

Figur 6b zeigt ein Fahrzeug 1 mit einem erfindungsgemäßen Zugangskontrollsystem 10, wobei zwei Erfassungsmittel 22 an B-Säulen 2 des Fahrzeugs 1 angeordnet sind und jeder Türgriff 3 des Fahrzeugs 1, insbesondere auch an einer Heckklappe 4.2 des Fahrzeugs 1, ein Erfassungsmittel 21 aufweist, um eine Annäherung 90 in einem Detektionsbereich 33 zu erkennen. Dadurch kann insbesondere eine Authentifizierung 93 an jedem der Fahrzeuggriffe 3 durchgeführt werden.

Die voranstehende Erläuterung der Ausführungsform beschreibt die vorliegende Erfindung ausschließlich im Rahmen von Beispielen. Selbstverständlich können einzelne Merkmale der Ausführungsform, sofern technisch sinnvoll, frei miteinander kombiniert werden, ohne den Rahmen der vorliegenden Erfindung zu verlassen. Die Erfindung ist durch die Ansprüche definiert.

### Bezuqszeichenliste

- 1: Fahrzeug
- 2: B-Säule
- 3: Türgriff
- 4: Fahrzeugtür
- 4.1: Fahrertür
- 4.2: Heckklappe
- 5: Fahrzeugstromversorgung
- 6: Schließvorrichtung
- 7: Fahrzeuginnenraum

- 10: Zugangskontrollsystem
- 11: Steuereinheit
- 12: Ortungsvorrichtung
- 13: Verifikationseinheit

- 20: Sensorvorrichtung
- 21: Erkennungsmittel
- 22: Erfassungsmittel
- 23: Näherungssensor
- 24: Energiequelle

- 30: Detektionssignale
- 30.1: Signalantwort
- 31: Fernbereich
- 32: Nahbereich
- 33: Detektionsbereich

- 90: Annäherung
- 91: Benutzer
- 92: ID-Gebereinheit
- 93: Authentifizierung
- 94: Öffnungswunsch

- I: Deaktivierungszustand
- II: Aktivierungszustand

- 100: Verfahren
- 101: Erfassen von 90
- 102: Überführen von 21 von I nach II
- 103: Generieren von 30
- 104: Empfangen von 30.1
- 105: Erkennen von 90
- 105.1: Authentifizieren von 91 und/oder 92
- 106: Entriegeln von 6
- 107: Aktivieren von 108
- 108: Innenauthentifikation
- 108.1: Orten von 92
- 108.2: Identifizieren von 92
- 108.3: Freigeben eines Motorstarts

## Patentansprüche

1. Zugangskontrollsystem (10) für ein Fahrzeug (1) aufweisend eine Sensorvorrichtung (20) mit einem Erfassungsmittel (22) zum Erfassen (101) einer Annäherung (90) in einem Nahbereich (32) des Fahrzeugs (1) und einem Erkennungsmittel (21) zum Erkennen (105) der Annäherung (90) in einem Detektionsbereich (33) des Fahrzeugs (1), wobei das Erkennungsmittel (21) von einem Deaktivierungszustand (I), in welchem durch das Erkennungsmittel (21) ein Generieren (103) von Detektionssignalen (30) zum Erkennen (105) der Annäherung (90) ausbleibt, bei Erfassen (101) der Annäherung (90) im Nahbereich (32) in einen Aktivierungszustand (II), in welchem Detektionssignale (30) zum Erkennen (105) der Annäherung (90) durch das Erkennungsmittel (21) generierbar sind, bringbar ist, wobei das Erkennungsmittel (21) eine erste Kommunikationsschnittstelle zur Kommunikation mit einer ID-Gebereinheit (92) eines Benutzers (91) aufweist, wobei das Erkennungsmittel (21) zum Erkennen einer Authentifizierung (93) des Benutzers (91) und/oder der ID-Gebereinheit (92) des Benutzers (91) ausgebildet ist,
**dadurch gekennzeichnet, dass**
die erste Kommunikationsschnittstelle eine NFC-Schnittstelle umfasst, wobei der Detektionsbereich (33) einen Teilbereich des Nahbereiches (31) bildet, wobei das Erfassungsmittel (22) einen Radar-Sensor, einen Lidar-Sensor, einen Ultraschall-Sensor, einen kapazitiven Sensor und/ oder einen optischen Sensor zum Erfassen (101) der Annäherung (90) aufweist.

2. Zugangskontrollsystem (10) nach Anspruch 1, **dadurch gekennzeichnet, dass** die Sensorvorrichtung (20) einen Näherungssensor (23) zum Erkennen eines Öffnungswunsches (94) einer Fahrzeugtür (4) des Fahrzeugs (1) umfasst und/oder dass das Erfassungsmittel (22) zum Erfassen der Annäherung (90) in einem Fernbereich (31) ausgebildet ist, insbesondere sodass ein Übergang der Annäherung (90) vom Fernbereich (31) in den Nahbereich (32) erkennbar ist.

3. Zugangskontrollsystem (10) nach einem der vorhergehenden Ansprüche,
**dadurch gekennzeichnet,**
**dass** das Erkennungsmittel (21) dazu ausgebildet ist, die Detektionssignale (30) im Aktivierungszustand (II) intervallweise und/oder kontinuierlich zu generieren und/oder dass die erste Kommunikationsschnittstelle eine kapazitive Schnittstelle umfasst.

4. Zugangskontrollsystem (10) nach einem der vorhergehenden Ansprüche,
**dadurch gekennzeichnet,**
**dass** das Erfassungsmittel (22) eine zweite Kommunikationsschnittstelle zur Kommunikation mit einer ID-Gebereinheit (92) eines Benutzers (91) aufweist, insbesondere wobei die zweite Kommunikationsschnittstelle eine Bluetooth-Schnittstelle, eine Bluetooth-Low-Energy-Schnittstelle, eine LF-Schnittstelle und/oder eine UWB-Schnittstelle umfasst.

5. Zugangskontrollsystem (10) nach einem der vorhergehenden Ansprüche,
**dadurch gekennzeichnet,**
**dass** das Erkennungsmittel (21) zur Energieübertragung an eine ID-Gebereinheit (92) ausgebildet ist, um eine Energieversorgung der ID-Gebereinheit (92) zu ermöglichen.

6. Zugangskontrollsystem (10) nach einem der vorhergehenden Ansprüche,
**dadurch gekennzeichnet,**
**dass** der Detektionsbereich (33) bis zu einem Abstand von kleiner oder gleich 50 cm, vorzugsweise kleiner oder gleich 10 cm, besonders bevorzugt kleiner oder gleich 3 cm, zum Fahrzeug (1) reicht.

7. Zugangskontrollsystem (10) nach einem der vorhergehenden Ansprüche,
**dadurch gekennzeichnet,**
**dass** die Sensorvorrichtung (20), insbesondere das Erkennungsmittel (21) und/oder Erfassungsmittel (22), mit einer Steuereinheit (11) in Kommunikationsverbindung bringbar ist, insbesondere wobei das Erkennungsmittel (21) durch die Steuereinheit (11) vom Deaktivierungszustand (I) in den Aktivierungszustand (II) bringbar ist und/oder dass die Sensorvorrichtung (20) eine Energiequelle (24) aufweist, durch welche das Erkennungsmittel (21) im Aktivierungszustand (II) und/oder das Erfassungsmittel (22) unabhängig von einer Fahrzeugstromversorgung (5) betreibbar ist.

8. Zugangskontrollsystem (10) nach einem der vorhergehenden Ansprüche,
**dadurch gekennzeichnet,**
**dass** eine Ortungsvorrichtung (12) zum Lokalisieren einer ID-Gebereinheit (92) und/oder eine Verifikationseinheit (13) zum Identifizieren einer ID-Gebereinheit (92) in einem Fahrzeuginnenraum (7) des Fahrzeugs (1) vorgesehen ist, insbesondere wobei die Ortungsvorrichtung (12) und/oder die Verifikationseinheit (13) nach einer Authentifizierung (93) im Detektionsbereich (33) von einem Deaktivierungszustand (I) in einen Aktivierungszustand (II) bringbar ist.

9. Zugangskontrollsystem (10) nach einem der vorhergehenden Ansprüche,
**dadurch gekennzeichnet,**
**dass** das Erkennungsmittel (21) und/oder Erfassungsmittel (22) an einer B-Säule (2) und/oder einem Türgriff (3), insbesondere einer Fahrertür (4), des Fahrzeugs (1) anordbar ist
und/oder dass mehrere Erkennungsmittel (21) und/oder mehrere Erfassungsmittel (22) vorgesehen sind, so dass mehrere, vorzugsweise sämtliche, Türgriffe (3) des Fahrzeugs (1) mit jeweils einem Erkennungsmittel (21) und/oder jeweils einem Erfassungsmittel (22) in Hinblick auf die Annäherung (90) überwachbar sind.

10. Fahrzeug (1),
**dadurch gekennzeichnet,**
**dass** ein Zugangskontrollsystem (10) nach einem der vorhergehenden Ansprüche vorgesehen ist.

11. Verfahren (100) zum Erkennen eines Zugangswunsches eines Benutzers (91) zu einem Fahrzeug (1), insbesondere nach Anspruch 10, durch ein Zugangskontrollsystem (10) nach einem der Ansprüche 1 bis 9, umfassend die folgenden Schritte:
- Erfassen (101) einer Annäherung (90) in einem Nahbereich (32) des Fahrzeugs (1),
- Überführen (102) eines Erkennungsmittels (21) zum Erkennen (105) der Annäherung (90) in einem Detektionsbereich (33) des Fahrzeugs (1) von einem Deaktivierungszustand (I), in welchem durch das Erkennungsmittel (21) ein Generieren (103) von Detektionssignalen (30) zum Erkennen der Annäherung (90) ausbleibt, in einen Aktivierungszustand (II),
- Generieren (103) von Detektionssignalen (30) zum Erkennen (105) der Annäherung (90) durch das Erkennungsmittel (21) im Aktivierungszustand (II),
- Erkennen (105) der Annäherung (90) im Detektionsbereich (33),
wobei das Erkennen (105) der Annäherung (90) folgenden Schritt umfasst:
- Authentifizieren (105.1) eines Benutzers (91) und/oder einer ID-Gebereinheit (92) eines Benutzers (91),
wobei das Generieren (103) der Detektionssignale (30) durch eine NFC-Übertragung erfolgt, wobei der Detektionsbereich (33) einen Teilbereich des Nahbereiches (31) bildet.

12. Verfahren (100) nach Anspruch 11,
**dadurch gekennzeichnet,**
**dass** das Erfassen (101) der Annäherung (90) kapazitiv, optisch, durch Radar, Lidar, Ultraschall und/oder eine Kommunikation mit einer ID-Gebereinheit (92), insbesondere durch eine Bluetooth-Kommunikation, eine Bluetooth-Low-Energy-Kommunikation, eine LF-Kommunikation und/oder eine UWB-Kommunikation, erfolgt.

13. Verfahren (100) nach einem der Ansprüche 11 oder 12,
**dadurch gekennzeichnet,**
**dass** das Generieren (103) der Detektionssignale (30) intervallweise oder kontinuierlich durchgeführt wird.

14. Verfahren (100) nach einem der vorhergehenden Ansprüche,
**dadurch gekennzeichnet,**
**dass** das Verfahren (100) ferner folgenden Schritt umfasst:
- Entriegeln (106) einer Schließvorrichtung (6) des Fahrzeugs (1) und/oder, dass das Verfahren (100) ferner folgenden Schritt umfasst:
- Aktivieren (107) einer Innenauthentifikation (108) des Fahrzeugs (1), insbesondere wobei das Aktivieren (107) der Innenauthentifikation (108) nach dem Entriegeln (106) der Schließvorrichtung (6) des Fahrzeugs (1) durchgeführt wird.

15. Verfahren (100) nach dem vorhergehenden Anspruch, **dadurch gekennzeichnet, dass** die Innenauthentifikation (108) ferner zumindest einen der folgenden Schritte umfasst:
- Orten (108.1) einer ID-Gebereinheit (92), insbesondere im Fahrzeug (1),
- Identifizieren (108.2) der georteten ID-Gebereinheit (92),
- Freigeben (108.3) eines Motorstarts des Fahrzeugs (1).

## Claims

1. Access control system (10) for a vehicle (1) comprising
a sensor device (20) having a detection means (22) for detecting (101) an approach (90) in a near range (32) of the vehicle (1) and a recognition means (21) for recognizing (105) the approach (90) in a detection range (33) of the vehicle (1),
wherein the recognition means (21) can be brought from a deactivation state (I), in which the recognition means (21) does not generate (103) detection signals (30) for recognizing (105) the approach (90), to an activation state (II), in which detection signals (30) for recognizing (105) the approach (90) can be generated by the recognition means (21), upon detection (101) of the approach (90) in the near range (32), the recognition means (21) having a first communication interface for communication with an ID transmitter unit (92) of a user (91), the recognition means (21) being designed to recognize an authentication (93) of the user (91) and/or of the ID transmitter unit (92) of the user (91),
**characterized in that,**
the first communication interface comprises an NFC interface, wherein the detection range (33) forms a partial area of the near range (32),
wherein the detection means (22) comprises a radar sensor, a lidar sensor, an ultrasonic sensor, a capacitive sensor, and/or an optical sensor for detecting (101) the approach (90).

2. Access control system (10) according to claim 1,
**characterized in that**
the sensor device (20) comprises a proximity sensor (23) for detecting a desire (94) to open a vehicle door (4) of the vehicle (1)
and/or **in that** the detection means (22) is designed to detect the approach (90) in a far range (31), in particular so that a transition of the approach (90) from the far range (31) to the near range (32) can be detected.

3. Access control system (10) according to any one of the preceding claims,
**characterized in that**
the recognition means (21) is designed to generate the detection signals (30) at intervals and/or continuously in the activation state (II)
and/or that the first communication interface comprises a capacitive interface.

4. Access control system (10) according to any one of the preceding claims,
**characterized in that**
the detection means (22) has a second communication interface for communicating with an ID transmitter unit (92) of a user (91), in particular the second communication interface comprising a Bluetooth interface, a Bluetooth low-energy interface, an LF interface and/or a UWB interface.

5. Access control system (10) according to any one of the preceding claims,
**characterized in that**
the recognition means (21) is adapted to transmit power to an ID transmitter unit (92) to enable a power supply to the ID transmitter unit (92).

6. Access control system (10) according to any one of the preceding claims,
**characterized in that**
the detection range (33) extends to a distance of less than or equal to 50 cm, preferably less than or equal to 10 cm, particularly preferably less than or equal to 3 cm, from the vehicle (1).

7. Access control system (10) according to any one of the preceding claims,
**characterized in that**
the sensor device (20), in particular the recognition means (21) and/or detection means (22), can be brought into a communication link with a control unit (11), in particular it being possible for the recognition means (21) to be brought by the control unit (11) from the deactivation state (I) into the activation state (II)
and/or **in that** the sensor device (20) has an energy source (24) by means of which the recognition means (21) in the activation state (II) and/or the detection means (22) can be operated independently of a vehicle power supply (5).

8. Access control system (10) according to any one of the preceding claims,
**characterized in that**
a locating device (12) for locating an ID transmitter unit (92) and/or a verification unit (13) for identifying an ID transmitter unit (92) is provided in a vehicle interior (7) of the vehicle (1), in particular it being possible for the locating device (12) and/or the verification unit (13) to be brought from a deactivation state (I) to an activation state (II) after authentication (93) in the detection range (33).

9. Access control system (10) according to any one of the preceding claims,
**characterized in that**
the recognition means (21) and/or detection means (22) can be arranged on a B-pillar (2) and/or a door handle (3), in particular a driver's door (4), of the vehicle (1) and/or **in that** a plurality of recognition means (21) and/or a plurality of detection means (22) are provided, so that a plurality of door handles (3) of the vehicle (1), preferably all of them, can be monitored with respect to the approach (90) by in each case one recognition means (21) and/or in each case one detection means (22).

10. Vehicle (1),
**characterized in that**
an access control system (10) according to any one of the preceding claims is provided.

11. Method (100) for detecting an access request of a user (91) to a vehicle (1), in particular according to claim 10, by an access control system (10) according to any one of claims 1 to 9, comprising the following steps:
- detecting (101) an approach (90) in a near range (32) of the vehicle (1),
- transferring (102) a recognition means (21) for detecting (105) the approach (90) in a detection range (33) of the vehicle (1) from a deactivation state (I), in which generation (103) of detection signals (30) for detecting the approach (90) by the detection means (21) fails, to an activation state (II),
- generating (103) detection signals (30) for detecting (105) the approach (90) by the recognition means (21) in the activation state (II),
- detecting (105) the approach (90) in the detection range (33),
wherein detecting (105) the approach (90) comprises the step of:
- authenticating (105.1) a user (91) and/or an ID transmitter unit (92) of a user (91), wherein generating (103) of the detection signals (30) is performed by an NFC transmission, wherein the detection range (33) forms a sub-range of the near range (32).

12. The method (100) according to claim 11,
**characterized in that**
detecting (101) of the approach (90) takes place capacitively, optically, by radar, lidar, ultrasound and/or a communication with an ID transmitter unit (92), in particular by a Bluetooth communication, a Bluetooth low-energy communication, an LF communication and/or a UWB communication.

13. The method (100) according to any one of claims 11 or 12,
**characterized in that**
generating (103) of the detection signals (30) is carried out intermittently or continuously.

14. The method (100) according to any one of the preceding claims,
**characterized in that**
the method (100) further comprises the step of:
- unlocking (106) a locking device (6) of the vehicle (1)
and/or, that the method (100) further comprises the step of:
- activating (107) an interior authentication (108) of the vehicle (1), in particular wherein the activating (107) of the interior authentication (108) is carried out after unlocking (106) the locking device (6) of the vehicle (1).

15. The method (100) according to any one of the preceding claims,
**characterized in that**
the interior authentication (108) further comprises at least one of the following steps:
- locating (108.1) an ID transmitter unit (92), in particular in the vehicle (1),
- identifying (108.2) the located ID transmitter unit (92),
- enabling (108.3) an engine start of the vehicle (1).

## Revendications

1. Système de contrôle d'accès (10) pour un véhicule (1) comprenant un dispositif de détection (20) comprenant un moyen de détection (22) pour détecter (101) une approche (90) dans une zone proche (32) du véhicule (1) et un moyen de reconnaissance (21) pour reconnaître (105) l'approche (90) dans une zone de détection (33) du véhicule (1),
dans lequel le moyen de reconnaissance (21) passe d'un état de désactivation (I), dans lequel le moyen de reconnaissance (21) ne génère pas (103) de signaux de détection (30) pour reconnaître (105) l'approche (90), lors de la détection (101) de l'approche (90) dans la zone proche (32), à un état d'activation (II), dans lequel des signaux de détection (30) pour reconnaître (105) l'approche (90) peuvent être générés par le moyen de reconnaissance (21), le moyen de reconnaissance (21) présentant une première interface de communication pour la communication avec une unité donneur ID (92) d'un utilisateur (91), le moyen de reconnaissance (21) étant conçu pour reconnaître une authentification (93) de l'utilisateur (91) et/ou de l'unité donneur ID (92) de l'utilisateur (91),
**caractérisé en ce que**
la première interface de communication comprend une interface NFC, la zone de détection (33) formant une partie de la zone proche (32),
dans lequel le moyen de détection (22) comprend un capteur radar, un capteur lidar, un capteur à ultrasons, un capteur capacitif et/ou un capteur optique pour détecter (101) l'approche (90).

2. Système de contrôle d'accès (10) selon la revendication 1,
**caractérisé en ce que**
le dispositif de détection (20) comprend un capteur de proximité (23) pour détecter un souhait d'ouverture (94) d'une porte de véhicule (4) du véhicule (1) et/ou **en ce que** le moyen de détection (22) est conçu pour détecter l'approche (90) dans une zone éloignée (31), en particulier de sorte qu'une transition de l'approche (90) de la zone éloignée (31) dans la zone proche (32) est reconnaissable.

3. Système de contrôle d'accès (10) selon l'une quelconque des revendications précédentes,
**caractérisé en ce que**
le moyen de reconnaissance (21) est conçu pour générer les signaux de détection (30) dans l'état d'activation (II) par intervalles et/ou en continu
et/ou **en ce que** la première interface de communication comprend une interface capacitive.

4. Système de contrôle d'accès (10) selon l'une quelconque des revendications précédentes,
**caractérisé en ce que**
le moyen de détection (22) présente une deuxième interface de communication pour la communication avec une unité donneur ID (92) d'un utilisateur (91), en particulier la deuxième interface de communication comprenant une interface Bluetooth, une interface Bluetooth à faible énergie, une interface LF et/ou une interface UWB.

5. Système de contrôle d'accès (10) selon l'une quelconque des revendications précédentes,
**caractérisé en ce que**
le moyen de reconnaissance (21) est conçu pour transmettre de l'énergie à une unité donneur ID (92) afin de permettre une alimentation en énergie de l'unité donneur ID (92).

6. Système de contrôle d'accès (10) selon l'une quelconque des revendications précédentes,
**caractérisé en ce que**
la zone de détection (33) s'étend jusqu'à une distance inférieure ou égale à 50 cm, de préférence inférieure ou égale à 10 cm, de manière particulièrement préférée inférieure ou égale à 3 cm, par rapport au véhicule (1).

7. Système de contrôle d'accès (10) selon l'une quelconque des revendications précédentes,
**caractérisé en ce que**
le dispositif de détection (20), en particulier le moyen de reconnaissance (21) et/ou le moyen de détection (22), peut être mis en liaison de communication avec une unité de commande (11), en particulier le moyen de reconnaissance (21) pouvant être amené par l'unité de commande (11) de l'état de désactivation (I) à l'état d'activation (II) et/ou **en ce que** le dispositif de détection (20) présente une source d'énergie (24) grâce à laquelle le moyen de reconnaissance (21) dans l'état d'activation (II) et/ou le moyen de détection (22) peuvent être exploités indépendamment d'une alimentation électrique du véhicule (5).

8. Système de contrôle d'accès (10) selon l'une quelconque des revendications précédentes,
**caractérisé en ce qu'**
il est prévu un dispositif de localisation (12) pour localiser une unité donneur ID (92) et/ou une unité de vérification (13) pour identifier une unité donneur ID (92) dans un habitacle (7) du véhicule (1), en particulier le dispositif de localisation (12) et/ou l'unité de vérification (13) pouvant être amenés d'un état de désactivation (I) dans un état d'activation (II) après une authentification (93) dans la zone de détection (33).

9. Système de contrôle d'accès (10) selon l'une quelconque des revendications précédentes,
**caractérisé en ce que**
le moyen de reconnaissance (21) et/ou le moyen de détection (22) peut être disposé sur un montant B (2) et/ou une poignée de porte (3), en particulier une porte de conducteur (4), du véhicule (1)
et/ou **en ce que** plusieurs moyens de reconnaissance (21) et/ou plusieurs moyens de détection (22) sont prévus, de sorte que plusieurs, de préférence toutes les poignées de porte (3) du véhicule (1) peuvent être surveillées avec respectivement un moyen de reconnaissance (21) et/ou respectivement un moyen de détection (22) en ce qui concerne l'approche (90).

10. Véhicule (1),
**caractérisé en ce qu'**
il est prévu un système de contrôle d'accès (10) selon l'une des revendications précédentes.

11. Procédé (100) de détection d'une demande d'accès d'un utilisateur (91) à un véhicule (1), notamment selon la revendication 10, par un système de contrôle d'accès (10) selon l'une des revendications 1 à 9, comprenant les étapes suivantes :
- détecter (101) une approche (90) dans une zone proche (32) du véhicule (1),
- faire passer (102) un moyen de détection (21) pour détecter (105) l'approche (90) dans une zone de détection (33) du véhicule (1) d'un état de désactivation (I), dans lequel une génération (103) de signaux de détection (30) pour détecter l'approche (90) par le moyen de détection (21) fait défaut, à un état d'activation (II),
- génération (103) des signaux de détection (30) pour détecter (105) l'approche (90) par le moyen de détection (21) dans l'état d'activation (II),
- détection (105) de l'approche (90) dans la zone de détection (33),
dans lequel la détection (105) de l'approche (90) comprend l'étape suivante :
- authentifier (105.1) un utilisateur (91) et/ou une unité donneur ID (92) d'un utilisateur (91),
la génération (103) des signaux de détection (30) étant effectuée par une transmission NFC, la zone de détection (33) formant une zone partielle de la zone proche (32).

12. Procédé (100) selon la revendication 11,
**caractérisé en ce que**
la détection (101) de l'approche (90) s'effectue de manière capacitive, optique, par radar, lidar, ultrasons et/ou une communication avec une unité donneur ID (92), en particulier par une communication Bluetooth, une communication Bluetooth à faible énergie, une communication LF et/ou une communication UWB.

13. Procédé (100) selon l'une des revendications 11 ou 12,
**caractérisé en ce que**
la génération (103) des signaux de détection (30) est effectuée par intervalles ou en continu.

14. Procédé (100) selon l'une quelconque des revendications précédentes,
**caractérisé en ce que**
le procédé (100) comprend en outre l'étape suivante :
- déverrouillage (106) d'un dispositif de fermeture (6) du véhicule (1)
et/ou **en ce que** le procédé (100) comprend en outre l'étape suivante :
- l'activation (107) d'une authentification intérieure (108) du véhicule (1), en particulier dans lequel l'activation (107) de l'authentification intérieure (108) est effectuée après le déverrouillage (106) du dispositif de fermeture (6) du véhicule (1).

15. Procédé (100) selon l'une quelconque des revendications précédentes,
**caractérisé en ce que**
l'authentification intérieure (108) comprend en outre au moins l'une des étapes suivantes
- emplacement (108.1) d'une unité donneur ID (92), en particulier dans le véhicule (1),
- identifier (108.2) l'unité donneur ID localisée (92),
- autoriser (108.3) un démarrage du moteur du véhicule (1).
